# EUROPÄISCHE PATENTANMELDUNG

(11) **EP 0 959 260 A2**
(43) Veröffentlichungstag der Anmeldung: **24.11.1999**
(21) Anmeldenummer: 99109958.1
(22) Anmeldetag: 20.05.1999
(51) Int. Cl.: F16D 65/092

(54) **Scheibenbremse für ein Landfahrzeug**

(30) Priorität: 22.05.1998 DE 19823034
(71) Anmelder: WABCO Perrot Bremsen GmbH, 68229 Mannheim (DE)
(72) Erfinder: Antony, Paul, Dipl.-Ing., 67550 Worms (DE); Jäger, Hellmut, Dipl.-Ing, 67067 Ludwigshafen (DE); Macke, Wlodzimierz, Dipl.-Ing., 68542 Heddesheim (DE)
(74) Vertreter: Patentanwälte Leinweber & Zimmermann

(57) **Zusammenfassung**

Die Erfindung betrifft eine Scheibenbremse für ein Landfahrzeug, mit einer Bremsscheibe, einem Bremsenträger und mindestens einem von einem Belagträger getragenen Bremsbelag, der bei Betätigen der Bremse in einer vorbestimmten Richtung gegen die Bremsscheibe gedrückt wird.

Erfindungsgemäß ist der Belagträger derart angeordnet und gehalten, daß sein in der vorbestimmten Richtung gesehener Abstand von der Mittelebene der Bremsscheibe in keinem Betriebszustand der Bremse einen vorgegebenen Mindestabstand unterschreitet.

## Beschreibung

Die Erfindung betrifft eine Scheibenbremse für ein Landfahrzeug, mit einer Bremsscheibe, einem Bremsenträger und mindestens einem von einem Belagträger getragenen Bremsbelag, der bei Betätigen der Bremse in einer vorbestimmten Richtung gegen die Bremsscheibe gedrückt wird.

Scheibenbremsen der eingangs genannten Art sind bekannt, beispielsweise aus der EP-PS 641 949. Dabei handelt es sich bei dem als Bremsenträger bezeichneten Element um einen die Bremskräfte aufnehmenden Teil der Bremse, der der Führung und der Abstützung von Bremsbacken dient. Bei der herkömmlichen Bremse sind die Bremsbacken in einem Belagschacht gelagert und stützen sich seitlich gegen die nach auswärts verlaufenden Arme mit Führungsflächen ab. Der Bremsenträger ist geschlossen und umgreift die Bremsscheibe rahmenartig. Die gießtechnische Herstellung eines solchen Bremsenträgers und die Bearbeitung der notwendigen Führungsflächen sind aufwendig. Ferner schränkt die bekannte Bauweise die Servicefreundlichkeit der Bremse ein, weil die rahmenartige Umfassung der Bremsscheibe einen Austausch der Bremsscheibe nur nach vorheriger, zumindest teilweiser Demontage des Bremsenträgers erlaubt. Durch den rahmenartigen Bremsenträger ist zwischen den Führungsflächen und der Bremsscheibe ein funktionsbedingter Freiraum vorhanden, wodurch es bei Unterschreitung der Verschleißgrenze der Bremsscheibe und/oder des Bremsbelags zu einem Herausfallen einer Bremsbacke kommen kann. Dies führt zu einem Totalausfall der Bremse.

Im Hinblick auf die obigen Nachteile hat die Anmelderin der vorliegenden Anmeldung eine entsprechende Verbesserung konzipiert und am 1. Oktober 1997 unter der Anmeldenummer 197 43 538.6 beim Deutschen Patentamt zum Patent angemeldet. Dabei handelt es sich tun einen rahmenlosen Bremsenträger, der reaktionsseitig kein Verbindungsjoch mehr aufweist und somit offen ist. Die Führung und Halterung der Bremsbacken erfolgt dabei einerseits in einem Belagschacht und andererseits im Bremssattel. Dafür sind die Führungsflächen am Bremsenträger unterschiedlich voneinander beabstandet und auch unterschiedlich ausgeführt, wodurch die Bearbeitungsschritte nicht gleich sind. Zwar wird dadurch die Servicefreundlichkeit der Bremse im Hinblick auf einen eventuell notwendigen Austausch der Bremsscheibe verbessert. Nach wie vor besteht aber die Gefahr, daß eine Bremsbacke bei Unterschreiten der Verschleißgrenzen herausfällt.

Der Erfindung liegt mithin die Aufgabe zugrunde, eine Scheibenbremse mit einem Bremsenträger der eingangs genannten Art derart weiterzuentwickeln, daß bei vereinfachter Herstellung eine verbesserte Servicefreundlichkeit und eine hohe Sicherheit erzielt werden.

Erfindungsgemäß wird die gestellte Aufgabe dadurch gelöst, daß der Belagträger derart angeordnet und gehalten ist, daß sein in der vorbestimmten Richtung gesehener Abstand von der Mittelebene der Bremsscheibe in keinem Betriebszustand der Bremse einen vorgegebenen Mindestabstand unterschreitet.

Mit anderen Worten ist erfindungsgemäß ausgeschlossen, daß sich der Belagträger über ein vorbestimmbares Maß hinaus der Bremsscheibe annähert. Da dieses Maß derart gewählt werden kann, daß ein Herausfallen weder des Belagträgers, noch des Bremsbelages droht, ist die Gefahr des Totalausfalls der Bremse zuverlässig gebannt. Dennoch kann die Bremsscheibe sehr einfach in Axialrichtung abgezogen werden, was die Servicefreundlichkeit erhöht.

Nach einer Ausgestaltung der Erfindung ist vorgesehen, daß der Bremsbelag an dem Belagträger befestigt ist, der Belagträger zum Bremsen in der vorbestimmten Richtung bezüglich des Bremsträgers verschieblich ist und ein erster Anschlag an dem Bremsenträger vorgesehen ist, der die Verschiebung des Belagträgers auf ein vorgegebenes Maß begrenzt.

Mit anderen Worten ist der Belagträger zwar verschieblich gehalten, kann sich aber wegen des ersten Anschlags der Bremsscheibe nicht über ein vorgegebenes Maß hinaus nähern, so daß ein Herausfallen des Belagträgers mit dem daran befestigten Bremsbelag nicht zu befürchten ist.

Dazu kann an dem Belagträger ein zweiter Anschlag vorgesehen sein, der bei Erreichen des vorgegebenen Mindestabstands des Belagträgers von der Mittelebene der Bremsscheibe an dem an dem Bremsträger vorgesehenen ersten Anschlag anschlägt.

Bevorzugt liegt der erste Anschlag in Richtung der Drehachse der Bremsscheibe gesehen außerhalb der Umfangslinie der Bremsscheibe. Diese Ausgestaltung ist insbesondere auf der Reaktionsseite der Bremse von Vorteil, weil dadurch der erste Anschlag bei einer Montage/Demontage der Bremsscheibe nicht im Weg ist, sondern die Bremsscheibe ungehindert abgezogen werden kann.

Erfindungsgemäß bevorzugt ist der erste Anschlag an einem in Richtung der Drehachse der Bremsscheibe gesehen außerhalb der Umfangslinie der Bremsscheibe liegenden Joch ausgebildet. Mit anderen Worten ist erfindungsgemäß im Gegensatz zur Ausführung nach der EP-PS 641 949 ein Joch vorgesehen, welches nicht die Bremsscheibe hintergreift, sondern übergreift, so daß es bei einem Abziehen der Bremsscheibe nicht im Weg liegt. Das Joch kann auch als eine brückenartige Verbindung zwischen einem einlaufseitigen Punkt und einem auslaufseitigen Punkt des Bremsenträgers angesehen werden.

Erfindungsgemäß weiter bevorzugt ist vorgesehen, daß Führungsflächen zum verschieblichen Halten des Belagträgers an dem Bremsenträger in Richtung der Drehachse der Bremsscheibe gesehen und zum Einleiten der auf den Bremsbelag wirkenden Reibkräfte in dem Bremsenträger außerhalb der Umfangslinie der Bremsscheibe liegen. Wiederum wird durch diese Ausgestaltung insbesondere auf der Reaktionsseite der Bremse eine erhöhte Servicefreundlichkeit erreicht, weil die Führungsflächen bei einem Abziehen der Bremsscheibe nicht im Weg sind.

Erfindungsgemäß bevorzugt ist ferner mindestens ein Ansatz an dem Belagträger vorgesehen, der sich in Radialrichtung der Bremsscheibe gesehen an einer Führungsfläche des Bremsenträgers verschieblich abstützt. Dadurch wird verhindert, daß der Belagträger nach radial innen in die Bremse hineinfällt.

Nach einer Ausgestaltung der Erfindung kann vorgesehen sein, daß der Bremsbelag zum Bremsen in der vorbestimmten Richtung verschieblich in dem Belagträger gehalten ist und der Belagträger in dem Bremsenträger lösbar befestigt ist. Dabei wirkt die Zuspannkraft zwar auf den Bremsbelag, nicht aber auf den Belagträger. Die spezielle Ausbildung der Halterung des Bremsbelages in dem Belagträger ist Gegenstand einer zeitgleich hinterlegten Anmeldung.

Da bei dieser Ausgestaltung keine dauerhafte Befestigung des Bremsbelages an dem Belagträger erforderlich ist, ist die Herstellung insgesamt vereinfacht. Ferner kann der Bremsbelag bei Erreichen seiner Verschleißgrenze ausgetauscht werden, ohne daß es auch gleichzeitig eines Austauschs des Belagträgers bedürfte. Schließlich wirkt sich wegen der Verschieblichkeit des Bremsbelages bezüglich des Belagträgers eine eventuelle Durchbiegung des Belagträgers nicht auf die Anlage des Bremsbelages an der Bremsscheibe beim Bremsen aus. Abgesehen davon wird wegen der genannten Verschieblichkeit des Bremsbelages bezüglich des Belagträgers eine Zuspannkraft immer auf den Bremsbelag und nicht auf den Belagträger wirken, weshalb eine Durchbiegung des Belagträgers schon aus diesem Grunde nicht zu erwarten ist.

Bevorzugt weist auch bei dieser Ausgestaltung der Bremsenträger ein in Richtung der Drehachse der Bremsscheibe gesehen außerhalb der Umfangslinie der Bremsscheibe liegendes Joch auf, an dem der Belagträger lösbar befestigt ist. Bei dieser Ausgestaltung wird also zur Befestigung des Belagträgers ein Element verwendet, das bei der Montage/Demontage der Bremsscheibe nicht im Weg ist.

Der Bremsbelag kann erfindungsgemäß bevorzugt zum Bremsen in der vorbestimmten Richtung verschieblich in dem Belagträger gehalten sein, wobei der Belagträger als Teil des Bremsenträgers ausgeführt ist. Wiederum gilt, daß die Zuspannkraft zwar auf den Bremsbelag, nicht aber auf den Belagträger wirkt. Bei dieser Ausgestaltung ergeben sich die gleichen Vorteile wie bei der Ausgestaltung, nach der der Belagträger an dem Bremsenträger lösbar befestigt ist.

Dabei kann der Bremsenträger ein in Richtung der Drehachse der Bremsscheibe gesehen außerhalb der Umfangslinie der Bremsscheibe liegendes Joch aufweisen, das einstückig mit dem Belagträger ausgeführt ist. Auch hier gilt, daß die gleichen Vorteile zu erzielen sind, wie bei derjenigen Ausführung, nach der der Belagträger an dem Joch lösbar befestigt ist.

Das Joch ist erfindungsgemäß bevorzugt abnehmbar an den übrigen Teilen des Bremsenträgers befestigt. Dies hat den Vorteil, daß nur die entsprechende Befestigung gelöst werden muß, um das Joch mit dem darin gehaltenen Bremsbelag vom Bremsenträger abzunehmen. Dadurch ist nicht nur ein schneller Zugang zur Bremsscheibe gesichert. Vielmehr ist damit auch ein schneller Zugang zu den Bremsbelägen realisiert.

Das jochförmige Verbindungsteil besitzt zweckmäßigerweise eine größere Breite A als die Bremsscheibendicke B. Da sich das bogenförmige Verbindungsjoch über den Scheibendurchmesser D erstreckt, sind sowohl die Anschlag- als auch die Haltebereiche für die Bremsbacken außerhalb der Rotationskontur der Bremsscheibe.

Der Bremsbelag ist erfindungsgemäß weiter bevorzugt in einer Durchgangsöffnung in dem Belagträger angeordnet. Mit anderen Worten ist ein den Bremsbelag vollständig umschließender Rahmen Vorgesehen, der eine allseits verläßliche Halterung und Führung des Bremsbelages sicherstellt. Die Durchgangsöffnung erlaubt ein Einsetzen des Bremsbelages von der scheibenabgewandten Seite her.

Dabei kann vorgesehen sein, daß die Durchgangsöffnung eine kreisförmige Innenkontur hat und der Bremsbelag eine im Querschnitt kreisförmige Außenkontur hat. Dadurch wird die Montage/Demontage des Bremsbelages an dem Belagträger besonders einfach.

Der Belagträger kann erfindungsgemäß zum Tragen von zwei oder mehr Bremsbelägen ausgelegt sein. Dadurch kann die Reibfläche vergrößert und damit sehr variabel entsprechend dem jeweiligen Anwendungsfall gestaltet werden. Zwischenräume zwischen benachbarten Bremsbelägen lassen eine wesentlich bessere Luftzirkulation und somit eine verbesserte Kühlfunktion zu, wodurch Schäden am Bremsbelag und/oder an der Bremsscheibe durch Überhitzung infolge von Dauerbremsungen vorgebeugt werden kann.

Der Bremsenträger kann einstückig mit einem zum Aufnehmen von Bremskräften dienenden Teil des Landfahrzeugs ausgebildet sein.

Bevorzugt handelt es sich bei der Scheibenbremse um eine Gleitsattelscheibenbremse.

Bei Gleitsattel-Scheibenbremsen stellt sich noch ein weiteres Problem:

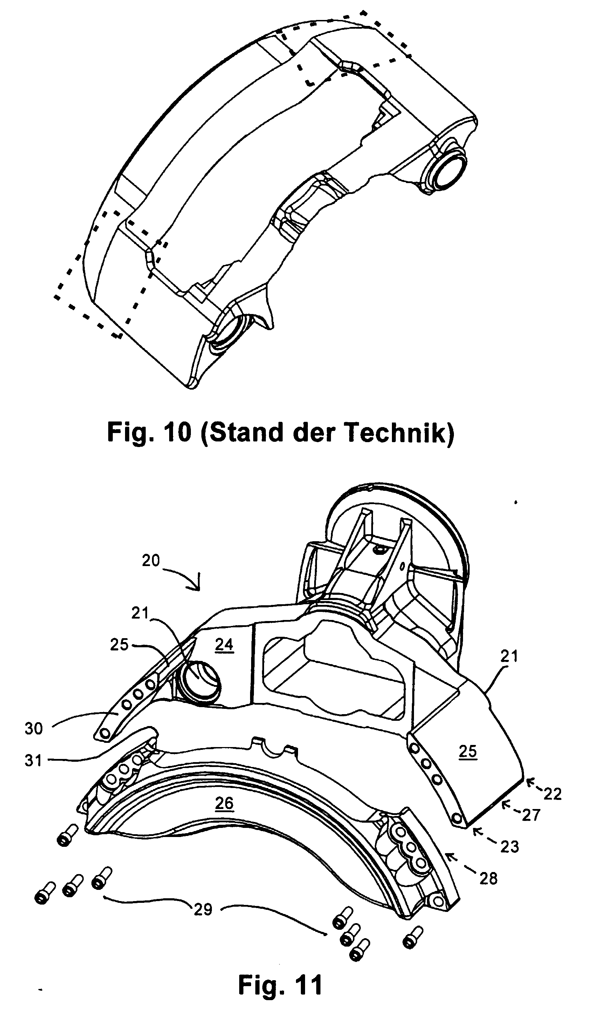

Generell vollziehen Gleitsättel der radial offenen Bauweise, wie sie insbesondere bei Nutzfahrzeugen zum Einsatz gelangen, in Abhängigkeit von der Größe der Bremskraft eine radiale Aufweitung. Diese elastische Radialverformung tritt insbesondere am reaktioneseitigen Sattelschenkel in Form einer Schrägstellung auf, was dazu führt, daß es beim reaktionsseitigen Bremsbelag zu einer nicht gleichmäßigen Belaganpressung gegen die Bremsscheibe kommt. Als Folge davon treten Kantenpressungen, radialer Schrägverschleiß und eine übermäßige Bremsscheibenbelastung auf, die dann zu Wärmerissen an der Bremsscheibe führen können. Dieser kritische und einer Dauerbelastung durch Verformung unterliegende Bereich am Gleitsattel liegt immer im Übergangsbereich von den beiden die Bremsscheibe übergreifenden Brückenbereichen in den radial einwärts verlaufenden reaktionsseitigen Bremssattelschenkel. Zwei solche Bereiche sind in Fig. 10 durch gestrichelte Rahmen markiert.

Um diesen kritischen Bereich gegen Sattelbrüche durch Materialermüdung und/oder durch Kerbwirkungen abzusichern, sind komplizierte Sattelkonturen und dementsprechende Materialstärken notwendig. Dies erfordert demzufolge aufwendige Gießformen zum Abgießen des Bremssattels und einen erhöhten Material- u. Gewichtseinsatz. Daraus resultiert eine Vergrößerung des Einbauvolumens der Bremse im Bereich der Radfelge. Da gerade die Bauraumvergrößerung nicht möglich ist, können diese kritischen Bereiche am Bremssattel nicht vollständig eliminiert werden.

Ein weiterer Nachteil der beschriebenen Ausführung liegt darin, daß ein Wechsel der Bremsscheibe erst dann möglich ist, wenn zuvor die Bolzenführungen des Bremssattels vom Bremsenträger gelöst und dann der die Bremsscheibe übergreifende Gleitsattel komplett entfernt worden ist. Der Ausbau ist dementsprechend umständlich und zeitaufwendig.

Nach diesem Aspekt liegt mithin der Erfindung die Aufgabe zugrunde, einen Gleitsattel für eine Gleitsattel-Scheibenbremse derart auszuführen, daß
a) die Funktionseigenschaften und
b) die Einsatzbedingungen
des Gleitsatteis verbessert werden.

Bei einer Scheibenbremse, die im übrigen auch die oben beschriebenen erfindungsgemäßen Merkmale haben kann, wird diese Aufgabe erfindungsgemäß dadurch gelöst, daß die Scheibenbremse einen Gleitsattel aufweist, der sich aus mindestens zwei lösbar miteinander verbundenen Teilen zusammensetzt, wobei zur Verbindung der beiden Teile mindestens ein im Übergangsbereich zwischen einem radial außerhalb der Umfangslinie der Bremsscheibe liegenden Brückenbereich und einem die Bremsscheibe radial überlappenden reaktionsseitigen Bremssattelschenkel angeordnetes Verbindungselement dient, das sich in Axialrichtung der Bremsscheibe erstreckt.

Daher wird nicht mehr wie bisher die Elastizität bei der zuspannbedingten Aufweitung des Gleitsattels durch das Grundmaterial (in der Regel Guß), sondern vielmehr durch die Verbindungselemente vorgegeben. Dadurch ist kein starrer Übergangsbereich mehr vorhanden. Das Material der Verbindungselemente kann dabei so gewählt werden, daß zum einen eine gezielte relative axiale Dehnung möglich wird und daß zum anderen auftretende Spannungen durch die im Vergleich mit dem übrigen Grundmaterial festeren Verbindungselemente sicher aufgenommen werden. Im Ergebnis wird eine schräge Aufweitung vermieden und die übrigen obigen Nachteile werden wegen der gleichmäßigen Belaganlage überwunden.

Bevorzugt weist eines der beiden Teile den die Bremsscheibe radial überlappenden Bremssattelschenkel auf. Durch die Trennung des reaktionsseitigen Bremssattelschenkels von dem Brückenbereich ergibt sich der folgende Vorteil: Werden die Verbindungselemente, die beispielsweise von Schrauben gebildet sein können, von der Reaktionsseite (offene Fahrzeugseite) aus entfernt, kann der Bremssattelschenkel von dem Brückenbereich abgenommen werden, wodurch ein freier Zugang von dieser Seite zur Bremsscheibe geschaffen ist. Mithin kann ohne Demontage der anderen Sattelteile, beispielsweise etwaiger Bolzenführungen, die Bremsscheibe unterhalb des Brückenbereiches zur offenen Fahrzeugseite hin entfernt werden.

Ein weiterer Vorteil ergibt sich dadurch, daß der reaktionsseitige Bremssattelschenkel beispielsweise aus einem Material höherer Festigkeit, wie etwa als Schmiedeteil, gegenüber den übrigen Sattelteilen hergestellt werden kann. Dadurch läßt sich die Satteldimensionierung positiv beeinflussen.

Ferner läßt der als Extrateil ausgeführte Bremssattelschenkel auch eine wesentlich bessere und flexiblere Gestaltung und Bearbeitung der Belaganlagenstruktur zu.

Im folgenden ist die Erfindung anhand bevorzugter Ausführungsbeispiele unter Bezugnahme auf die beiliegende Zeichnung mit weiteren Einzelheiten näher erläutert. Dabei zeigen
Fig. 1 eine perspektivische Seitenansicht einer bevorzugten Ausführungsform eines Bremsenträgers,
Fig. 2 eine geschnittene Seitenansicht entlang der Ebene II/II in Fig. 1,
Fig. 3 schematisch das Einsetzen einer Bremebacke in den Bremsenträger nach Fig. 1,
Fig. 4 den Bremsenträger nach Fig. 1 mit darin eingesetztem Belagträger, wobei der Belagträger mehrere Bremsbeläge verschieblich hält,
Fig. 5 eine geschnittene Seitenansicht durch die Ausführungsform nach Fig. 4,
Fig. 6 die gleiche Ansicht wie Fig. 5, jedoch von einer weiteren Ausführungsform,
Fig. 7 die gleiche Ansicht wie Fig. 4, jedoch von einer anderen Ausführungsform und ohne eingesetzte Bremsbeläge,
Fig. 8 eine Schnittansicht entlang der Linie VIII/VIII in Fig. 7,
Fig. 9 eine perspektivische Seitenansicht einer Ausführungsform der Erfindung mit fest an dem Fahrzeug angebrachtem Bremsenträger,
Fig. 10 eine perspektivische Ansicht eines Gleitsattels nach dem Stand der Technik,
Fig. 11 eine perspektivische Ansicht eines zweigeteilten Gleitsattels nach einem Ausführungsbeispiel der Erfindung und

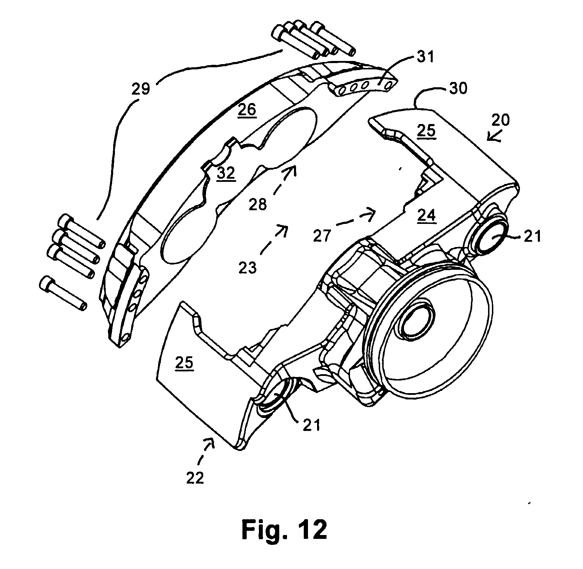

Fig. 12 den gleichen Sattel wie Fig. 11, jedoch in einer anderen Ansicht.

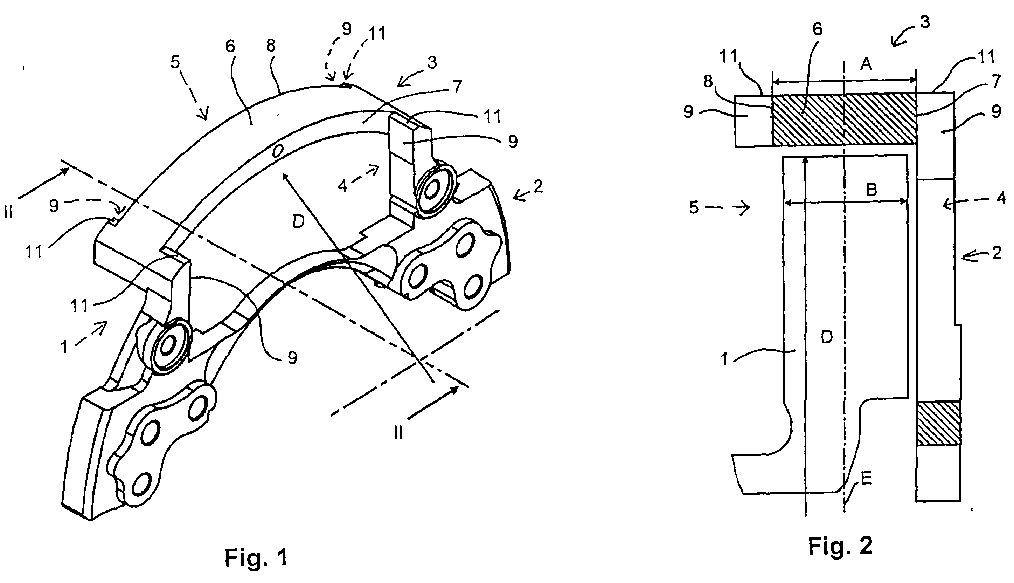

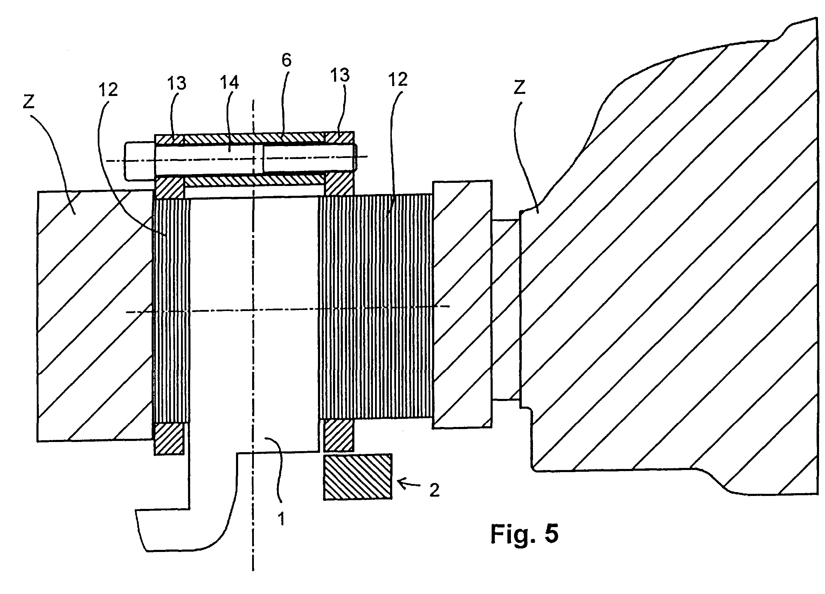

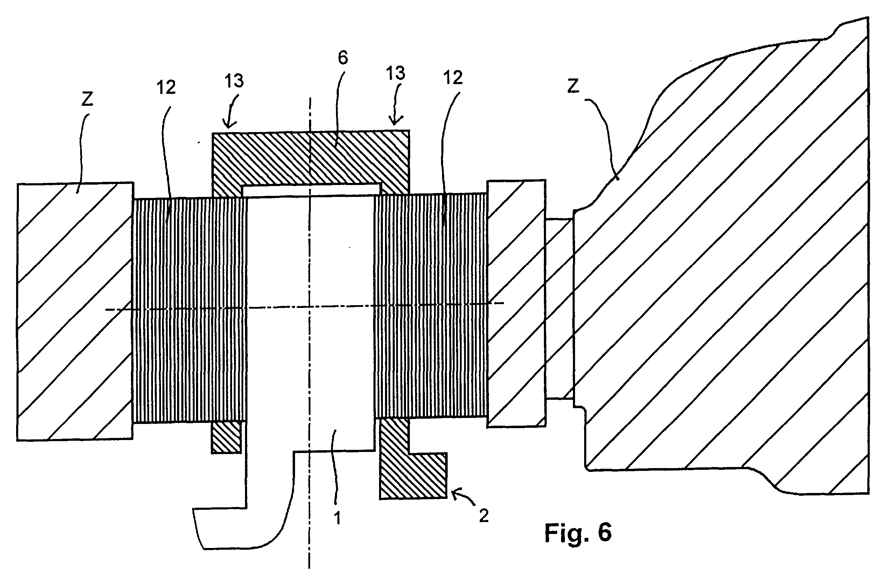

Fig. 1 zeigt eine perspektivische Seitenansicht einer Ausführungsform der Erfindung, nämlich einen Bremsenträger 2, während Fig. 2 eine geschnittene Seitenansicht zeigt. Dabei erstreckt sich ein Teil des Bremsenträgers 2 auf einer Seite (hier rechts) einer Bremsscheibe 1 parallel zur Bremsscheibenmittelebene E und übergreift dann über dem Scheibendurchmesser D (hier nach links) mit seinem Halte-/Befestigungsbereich 3 die Bremsscheibe 1. Der Bereich 3 besteht aus einem jochförmigen Verbindungsteil 6 größerer Breite A als die Bremsscheibendicke B sowie aus beidseitig vorgesehenen Führungsflächen 9 für Bremsbacken 4, 5. Das jochförmige Verbindungsteil verläuft von einem einlaufseitigen Punkt zu einem auslaufseitigen Punkt des Bremsenträgers 2. Dem Anschlag der Bremsbacken dienen Anlageflächen 7, 8 am Verbindungsteil 6. Der radialen Halterung und Führung der Bremsbacken 4, 5 dienen Leisten 11, auf denen die Bremsbacken mit seitlichen Vorsprüngen 10 aufliegen. Die Betätigung erfolgt durch eine Zuspannvorrichtung Z, die in den Figuren 5 und 6 schematisch angedeutet ist.

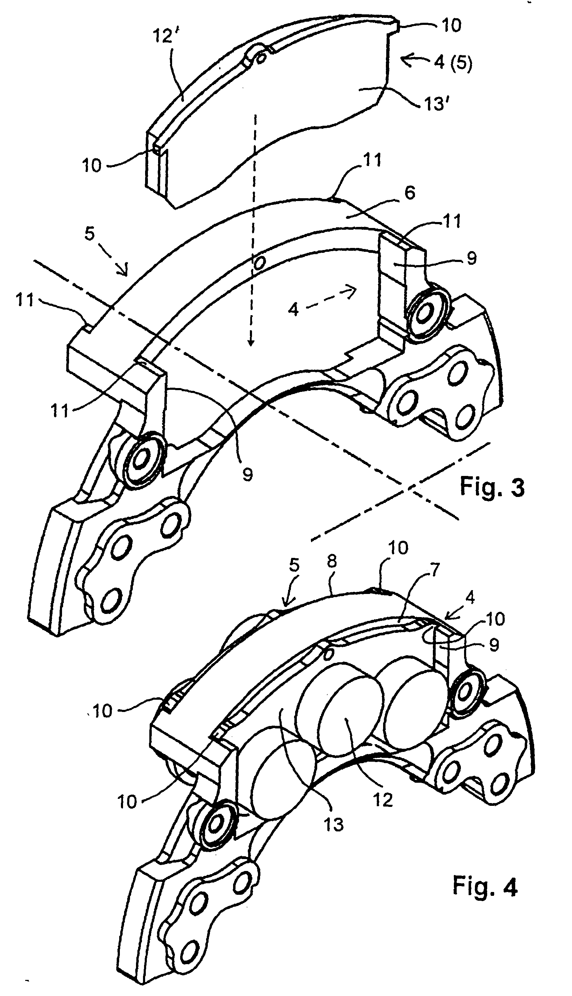

Fig. 3 zeigt schematisch eine in den Bremsenträger einzulegende Bremsbacke 4 (5) mit den vorher beschriebenen Einzelheiten. Bei dieser Ausführung besteht eine feste Verbindung zwischen dem Bremsbelag 12' und dem Belagträger 13'. Fig. 4 zeigt die bereits im Bremsenträger auf den Leisten gelagerten Bremsbacken 4, 5. Im Gegensatz zu der Darstellung nach Fig. 3 setzen sich die Bremsbacken nach Fig. 4 aus einem Belagträger 13 und darin verschieblich gehaltenen Bremsbelägen 12 zusammen.

Fig. 5 zeigt eine Ausführung, bei der die der Führung der Bremsbeläge 12 dienenden Belagträger 13 mittels einer Verschraubung 14 am Verbindungsteil 6 befestigt sind. Auf der rechten Seite der Bremsscheibe 1 ist der Bremsbelag 12 im Neuzustand dargestellt, linksseitig dagegen ein abgenutzter Bremsbelag 12. Wie deutlich erkennbar ist, kann eine weitere Belagverschiebung durch die Zuspannvorrichtung Z auf der linken Seite nicht mehr erfolgen. Es ist also ausgeschlossen, daß der Bremsbelag 12 zu weit in Richtung Bremsscheibe 1 geschoben wird, weshalb ein Herausfallen des Bremsbelages 12 aus seiner Führung/Halterung ausgeschlossen ist.

Das gleiche gilt im übrigen für die Ausführungsform nach den Figuren 1, 2 und 3, weil die dort gezeigte Bremsbacke 4 (5) bei Erreichen der Verschleißuntergrenze gegen das jochförmige Verbindungsteil 6 läuft und somit nicht weiter verschiebbar sind.

Fig. 6 zeigt eine Variante, bei der das Verbindungsteil 6 und die Belagträger 13 einstückig sind. Sie werden von der Zuspannvorrichtung Z umgriffen.

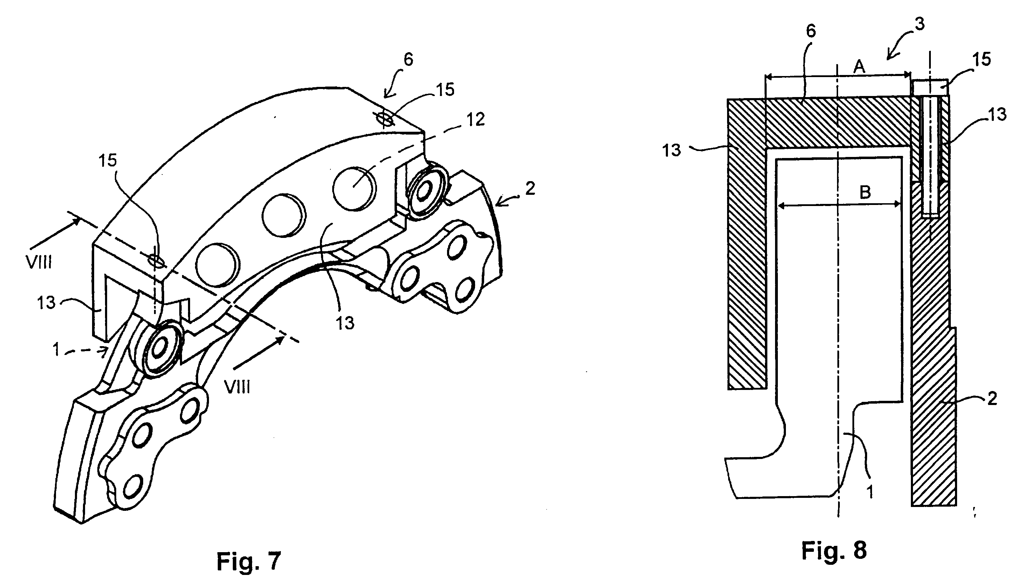

In Fig. 7 ist eine perspektivische Seitenansicht des auf Fig. 6 aufbauenden Bremsenträgers 2 gezeigt, dessen Oberteil, welches sich aus den Bereichen 6, 13 zusammensetzt, mit dem Unterteil des Bremsenträgers 2 mittels Verschraubungen 15 zusammengehalten ist. Fig. 8 zeigt eine geschnittene Seitenansicht durch die Ebene VIII/VIII im Bereich der genannten Verschraubung 15.

Es sei angemerkt, daß die Ausführungen nach den Figuren 5 bis 8 erfordern, daß die Bremsbeläge 12 verschieblich von den Belagträgern 13 in Öffnungen getragen sind.

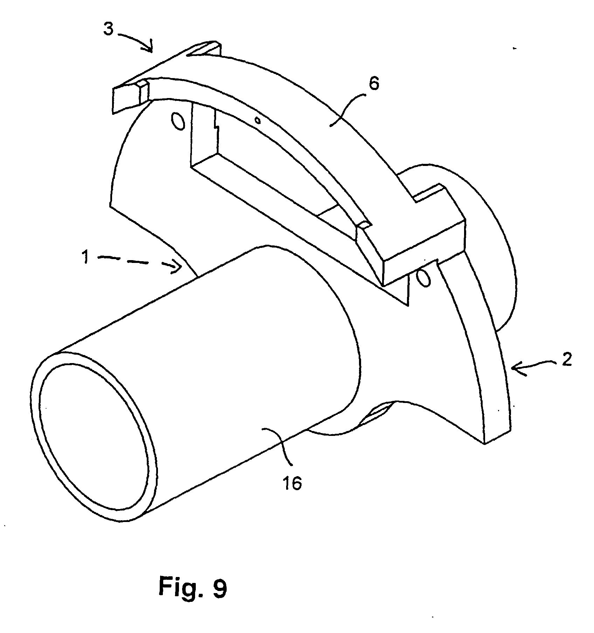

Fig. 9 zeigt perspektivisch die offene, die Bremsscheibe 1 übergreifende Seite des erfindungsgemäßen Bremsenträgers 2, hier als integriertes Teil eines Fahrzeugteils 16.

Die Funktion ist denkbar einfach. Entweder werden die Bremsbacken 4, 5 bzw. 12, 12', 13, 13' - wie in den Figuren 3 und 4 dargestellt - auf den Leisten 11 schwimmend gelagert, bis sie infolge Belagverschleißes gegen die Anschlagflächen 7, 8 des jochförmigen Verbindungsteils 6 anschlagen, wonach eine weitere Verschiebung nicht möglich ist, weil das Verbindungsteil 6 eine größere Breite A als die Dicke B der Bremsscheibe 1 aufweist. Oder die Belagträger 13 sind nach Fig. 5 fest am Verbindungsteil 6 mittels Verschraubung 14 befestigt, und die Bremsbeläge 12 sind darin schwimmend angeordnet.

In jedem Fall bietet das jochförmige Verbindungsteil 6 der Breite A mit den Flächen 7, 8 die Gewähr dafür, daß eine übermäßige Verschiebung der Bremsbacken - egal welcher Ausführung - in Richtung Bremsscheibe 1 nur bis zu einer definierten Verschleißgrenze möglich ist. Der Kontakt zwischen den Bremsbacken und allen Führungs- und Anschlagflächen des Bremsenträgers bleibt erhalten.

Da das Verbindungsteil 6 und die Halterungen für die Belagträger 13 die Bremsscheibe übergreifen - nicht mehr rahmenartig umgreifen wie beim Stand der Technik - kann die Bremsscheibe 1 zur offenen Seite sehr schnell abgezogen werden. Ebenso ist die gießtechnische Herstellung gegenüber dem Stand der Technik vereinfacht. Auch können bislang erforderliche Halte- und Federmittel, wie bei bekannten Bremsbackenlagerungen entfallen.

Im folgenden ist das Ausführungsbeispiel nach den Figuren 11 u. 12 erläutert.

In bekannter Weise ist ein Gleitsattel 20 axial verschieblich durch Bolzenführungen 21 auf einem Bremsenträger 22 (nicht gezeigt) gelagert und umgreift eine Bremsscheibe 23 mit seinen beiden Sattelschenkeln. Die Bolzenführungen befinden sich im betätigungsseitigen Sattelschenkel 24, der eine Betätigungseinrichtung aufweist. Von diesem Sattelschenkel erstrecken sich über den Außenumfang der Bremsscheibe zwei Brückenstreben 25, an deren Enden sich ein reaktionsseitiger Sattelschenkel 26 anschließt. Somit liegt ein radial offener Gleitsattel vor, durch dessen Öffnungen beidseitig der Bremsscheibe im Bremsenträger gelagerte Bremsbeläge 27, 28 zugänglich sind.

Zwischen den beiden Brückenstreben 25 und dem reaktionsseitigen Sattelschenkel 26 ist eine Schnittstelle vorhanden, so daß der Bereich nicht mehr wie nach dem Stand der Technik als Einheit starr, sondern zweiteilig ausgeführt ist, und die Teile 25, 26 mittels Verbindungselementen 29 an deren Stirnflächen 30, 31 zusammengehalten werden. Somit wird nicht mehr wie bisher die Elastizität durch das Grundmaterial (Guß), sondern vielmehr durch die die Teile 25, 26 zusammenhaltenden Verbindungselemente 29 vorgegeben. Der starre Übergangsbereich ist nicht mehr vorhanden. Das Material der Verbindungselemente 29 ist so gewählt, daß:
a) eine gezielte, relative axiale Dehnung ermöglicht wird und daß
b) auftretende Spannungen durch die höherfesten Verbindungselemente 29 sicher aufgenommen werden.

Dadurch wird eine schräge Aufweitung vermieden, und es erfolgt mit einer gleichmäßigen Belaganlage eine Beseitigung der oben genannten Nachteile.

Durch die Trennung des reaktionsseitigen Sattelschenkels 26 von den Brückenstreben 25 ergibt sich ein weiterer Vorteil: Werden die Verbindungselemente 29, hier Schrauben, von der Reaktionsseite (offene Fahrzeugseite) aus entfernt, kann der Sattelschenkel 26 von den Brückenstreben 25 abgenommen werden, wodurch ein freier Zugang von dieser Seite zur Bremsscheibe vorhanden ist. Ohne Demontage der anderen Sattelteile inklusive der Bolzenführungen kann die Bremsscheibe unterhalb der Brückenstreben zur offenen Fahrzeugseite hin entfernt werden.

Im Bereich der beschriebenen Schnittstelle ist auch die Ausbildung von Verbindungsprofilen, z.B. Klauenprofilen usw., zwischen den Teilen 25 u. 26 möglich, wodurch in Verbindung mit den Verbindungselementen 29 ein Formschluß mit einer relativen axialen Dehnung erreicht wird, der aber dennoch durch die Verbindungselemente 29 eine lösbare Verbindung darstellt. Unter Beibehaltung der beschriebenen Vorteile kann dadurch die Anzahl und die Dimensionierung der Verbindungselemente 29 reduziert werden.

Ein weiterer Vorteil ergibt sich dadurch, daß der reaktionsseitige Sattelschenkel 26 aus einem Material höherer Festigkeit, z.B. als Schmiedeteil, gegenüber den übrigen Sattelteilen 24, 25 hergestellt werden kann. Dadurch läßt sich die Satteldimensionierung positiv beeinflussen.

Weiterhin läßt der als Extrateil vorhandene Sattelschenkel 26 auch eine wesentlich bessere und flexiblere Gestaltung und Bearbeitung einer Belaganlagestruktur 32 zu.

Durch den Einsatz des mit den oben genannten Merkmalen gekennzeichneten Gleitsattels läßt sich mit den beschriebenen Vorteilen auch ein Verfahren für den Bremsscheibenwechsel durch folgende Verfahrensschritte kennzeichnen:
1. Radialer Ausbau der Bremsbeläge 27, 28 durch die Öffnung des Gleitsattels,
2. Entfernen der Verbindungselemente 29 von der leicht zugänglichen Fahrzeugseite (hier Reaktionsseite des Gleitsattels) her,
3. Trennung des Sattelschenkels 26 von den Brückenstreben 25 und
4. axialer Ausbau der Bremsscheibe aus dem offenen Gleitsattel.

Der Einsatz dieses Gleitsattels sowie des Verfahrens zur Durchführung eines Scheibenwechsels bietet sich insbesondere bei einer Gleitsattel-Scheibenbremse mit Bremsbelägen ohne Rückenplatte sowie bei einem die Bremsscheibe nicht umgreifenden Bremsenträger der offenen Bauweise an, der ja auch herkömmliche Beläge tragen kann.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse für ein Landfahrzeug, mit
einer Bremsscheibe (1),
einem Bremsenträger (2) und
mindestens einem von einem Belagträger (13) getragenen Bremsbelag (12), der bei Betätigen der Bremse in einer vorbestimmten Richtung gegen die Bremsscheibe (1) gedrückt wird,
dadurch gekennzeichnet, daß
der Belagträger (13) derart angeordnet und gehalten ist, daß sein in der vorbestimmten Richtung gesehener Abstand von der Mittelebene (E) der Bremsscheibe (1) in keinem Betriebszustand der Bremse einen vorgegebenen Mindestabstand unterschreitet.

2. Scheibenbremse nach Anspruch 1, dadurch gekennzeichnet, daß der Bremsbelag (12') an dem Belagträger (13') befestigt ist, der Belagträger zum Bremsen in der vorbestimmten Richtung bezüglich des Bremsenträgers (2) verschieblich ist und ein erster Anschlag (7) an dem Bremsenträger (2) vorgesehen ist, der die Verschiebung des Belagträgers auf ein vorgegebenes Maß begrenzt.

3. Scheibenbremse nach Anspruch 2, gekennzeichnet durch einen an dem Belagträger vorgesehenen zweiten Anschlag, der bei Erreichen des vorgegebenen Mindestabstands des Belagträgers von der Mittelebene (E) der Bremsscheibe (1) an dem an dem Bremsenträger (2) vorgesehenen ersten Anschlag (7) anschlägt.

4. Scheibenbremse nach Anspruch 2 oder 3, dadurch gekennzeichnet, daß der erste Anschlag (7) in Richtung der Drehachse der Bremsscheibe (1) gesehen außerhalb der Umfangslinie (D) der Bremsscheibe (1) liegt.

5. Scheibenbremse nach einem der Ansprüche 2 bis 4, dadurch gekennzeichnet, daß der erste Anschlag (7) an einem in Richtung der Drehachse der Bremsscheibe (1) gesehen außerhalb der Umfangslinie (D) der Bremsscheibe (1) liegenden Joch (6) ausgebildet ist.

6. Scheibenbremse nach einem der Ansprüche 2 bis 5, gekennzeichnet durch Führungsflächen (9, 11) zum verschieblichen Halten des Belagträgers an dem Bremsenträger (2) in Richtung der Drehachse der Bremsscheibe (1) gesehen und zum Einleiten der auf den Bremsbelag (12) wirkenden Reibkräfte in den Bremsenträger (2) außerhalb der Umfangslinie (D) der Bremsscheibe (1) liegen.

7. Scheibenbremse nach einem der Ansprüche 2 bis 6, gekennzeichnet durch mindestens einen Ansatz (10) an dem Belagträger, der sich in Radialrichtung der Bremsscheibe (1) gesehen an einer Führungsfläche (11) des Bremsenträgers (2) verschieblich abstützt.

8. Scheibenbremse nach Anspruch 1, dadurch gekennzeichnet, daß der Bremsbelag (12) zum Bremsen in der vorbestimmten Richtung verschieblich in dem Belagträger (13) gehalten ist und der Belagträger (13) an dem Bremsenträger (2) lösbar befestigt ist.

9. Scheibenbremse nach Anspruch 8, dadurch gekennzeichnet, daß der Bremsenträger (2) ein in Richtung der Drehachse der Bremsscheibe (1) gesehen außerhalb der Umfangslinie (D) der Bremsscheibe (1) liegendes Joch (6) aufweist, an dem der Belagträger (13) lösbar befestigt ist.

10. Scheibenbremse nach Anspruch 1, dadurch gekennzeichnet, daß der Bremsbelag (12) zum Bremsen in der vorbestimmten Richtung verschieblich an dem Belagträger (13) gehalten ist und der Belagträger (13) als Teil des Bremsenträgers (2) ausgeführt ist.

11. Scheibenbremse nach Anspruch 10, dadurch gekennzeichnet, daß der Bremsenträger (2) ein in Richtung der Drehachse der Bremsscheibe (1) gesehen außerhalb der Umfangslinie der Bremsscheibe (1) liegendes Joch (6) aufweist, das einstückig mit dem Belagträger (13) ausgeführt ist.

12. Scheibenbremse nach Anspruch 11, dadurch gekennzeichnet, daß das Joch (6) abnehmbar an den übrigen Teilen des Bremsenträgers (2) befestigt ist.

13. Scheibenbremse nach einem der Ansprüche 1 bis 12, dadurch gekennzeichnet, daß das jochförmige Verbindungsteil (6) eine größere Breite A als die Bremsscheibendicke B aufweist.

14. Scheibenbremse nach einem der Ansprüche 8 bis 13, dadurch gekennzeichnet, daß der Bremsbelag (12) in einer Durchgangsöffnung in dem Belagträger (13) angeordnet ist.

15. Scheibenbremse nach Anspruch 14, dadurch gekennzeichnet, daß die Durchgangsöffnung eine kreisförmige Innenkontur hat und der Bremsbelag (12) eine im Querschnitt kreisförmige Außenkontur hat.

16. Scheibenbremse nach einem der vorangehenden Ansprüche, dadurch gekennzeichnet, daß der Belagträger (13) zum Tragen von zwei oder mehr Bremsbelägen (12) ausgelegt ist.

17. Scheibenbremse nach einem der vorangehenden Ansprüche, dadurch gekennzeichnet, daß der Bremsenträger (2) einstückig mit einem zum Aufnehmen von Bremskräften dienenden Teil (16) des Landfahrzeugs ausgebildet ist.

18. Scheibenbremse nach einem der vorangehenden Ansprüche, dadurch gekennzeichnet, daß sie eine Gleitsattelscheibenbremse ist.

19. Scheibenbremse nach Anspruch 18, dadurch gekennzeichnet, daß sie einen Gleitsattel (20) aufweist, der sich aus mindestens zwei lösbar miteinander verbundenen Teilen (25, 26) zusammensetzt, wobei zur Verbindung der beiden Teile (25, 26) mindestens ein im Übergangsbereich zwischen einem radial außerhalb der Umfangslinie (D) der Bremsscheibe (23) liegenden Brückenbereich und einem die Bremsscheibe (23) radial überlappenden reaktionsseitigen Bremssattelschenkel angeordnetes Verbindungselement (29) dient, das sich in Axialrichtung der Bremsscheibe (23) erstreckt.

20. Scheibenbremse nach Anspruch 19, dadurch gekennzeichnet, daß eines der beiden Teile (25, 26) den die Bremsscheibe (23) radial überlappenden Bremssattelschenkel aufweist.
